# EUROPEAN PATENT APPLICATION

(11) **EP 4 113 455 A1**
(43) Date of publication of application: **04.01.2023**
(21) Application number: 21778783.7
(22) Date of filing: 18.03.2021
(51) Int. Cl.: G06T 19/20, G06T 1/00

(54) **INFORMATION PROCESSING DEVICE AND METHOD, AND PROGRAM**

(30) Priority: 31.03.2020 JP 2020065031
(71) Applicant: Sony Group Corporation, Tokyo 108-0075 (JP)
(72) Inventor: HAYASAKA Kengo, Tokyo 108-0075 (JP); ITO Katsuhisa, Tokyo 108-0075 (JP)
(74) Representative: D Young & Co LLP
(86) International application number: PCT/JP2021/010986
(87) International publication number: WO 2021/200190

(57) **Abstract**

The present disclosure relates to an information processing apparatus and method as well as a program that allow editing of a depth map.

An assist depth map is generated that includes depth data to be added to a basic depth map. For example, an assist depth map is generated that includes depth data to be locally added to a basic depth map. The present disclosure is applicable to an information processing apparatus, an image processing apparatus, a computer, an information processing method, an image processing method, a program, or the like.

## Description

### [Technical Field]

The present disclosure relates to an information processing apparatus and method as well as a program and relates, more particularly, to an information processing apparatus and method as well as a program that allow editing of a depth map.

### [Background Art]

A variety of research efforts have been carried out in recent years in association with an image processing technology for generating a depth map from parallax images of two left and right viewpoints or multiple viewpoints (refer, for example, to PTL 1). As for a framework of a passive sensing algorithm, for example, a method has been conceived of that eventually outputs a depth map by calculating a matching cost first, followed by devising the way to leave highly reliable information for each and making corrections. Also, a technique has been proposed that determines disparity values of pixels with an unknown depth by using a highly reliable depth map.

### [Citation List]

### [Patent Literature]

[PTL 1]
PCT Patent Publication No. WO2014/064875

### [Summary]

### [Technical Problem]

It should be noted, however, that a generated depth map does not always perfectly and correctly correspond to an image. The present disclosure is intended to allow editing of a depth map.

### [Solution to Problem]

An information processing apparatus according to an aspect of the present technology is an information processing apparatus including an assist depth map generation section adapted to generate an assist depth map that includes depth data to be added to a basic depth map.

An information processing method according to an aspect of the present technology is an information processing method including generating an assist depth map that includes depth data to be added to a basic depth map.

A program according to an aspect of the present technology is a program for causing a computer to function as an assist depth generation section adapted to generate an assist depth map that includes depth data to be added to a basic depth map.

In the information processing apparatus and method as well as the program according to an aspect of the present technology, an assist depth map is generated that includes depth data to be added to a basic depth map.

### [Brief Description of Drawings]

[Fig. 1]

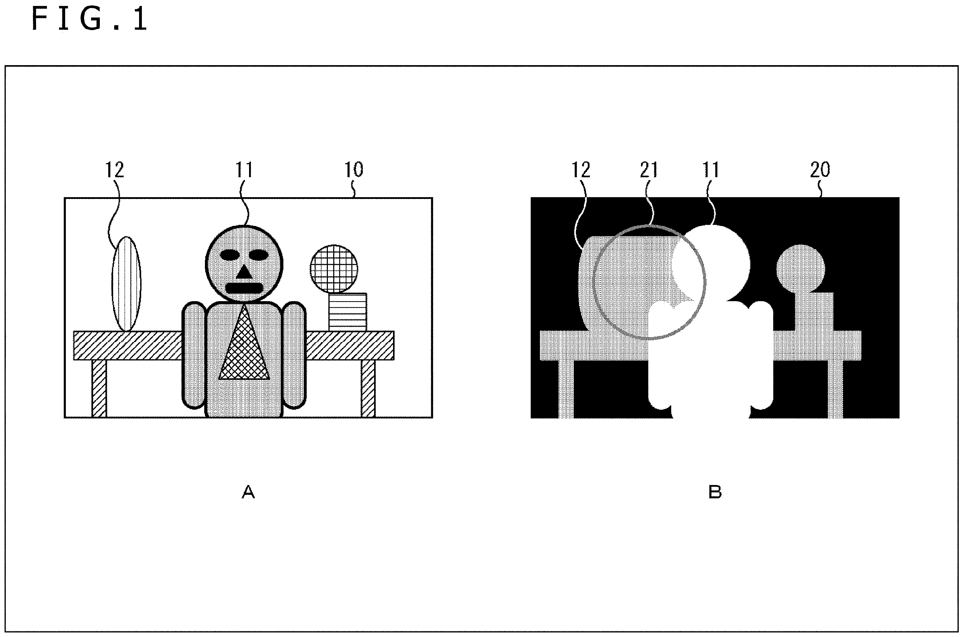

   Fig. 1 is a diagram illustrating an example of a captured image and an example of a depth map.
[Fig. 2]

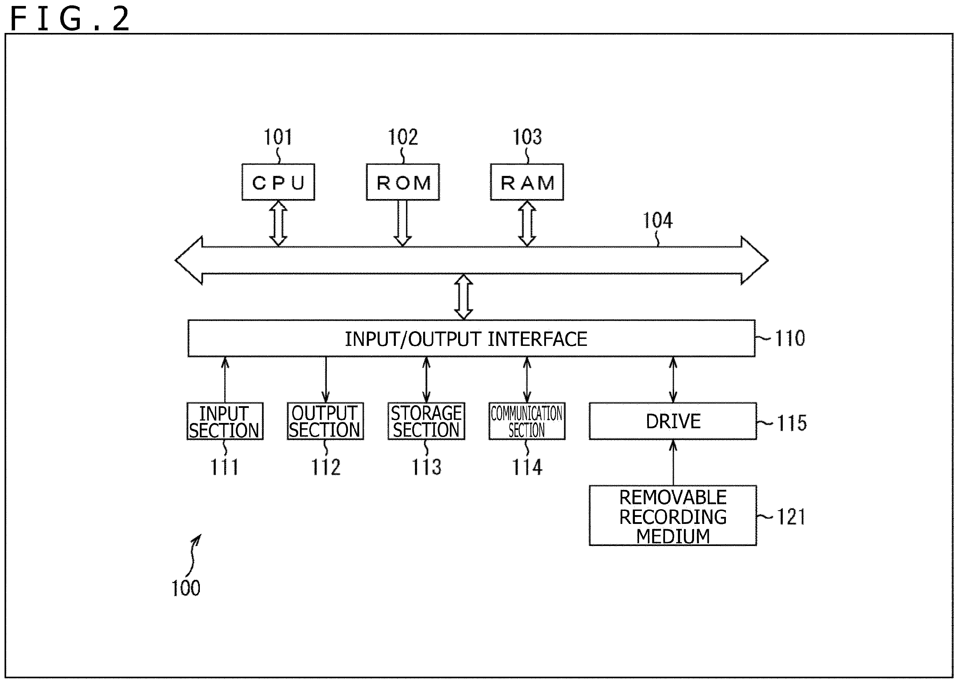

   Fig. 2 is a block diagram illustrating examples of main components of a computer.
[Fig. 3]

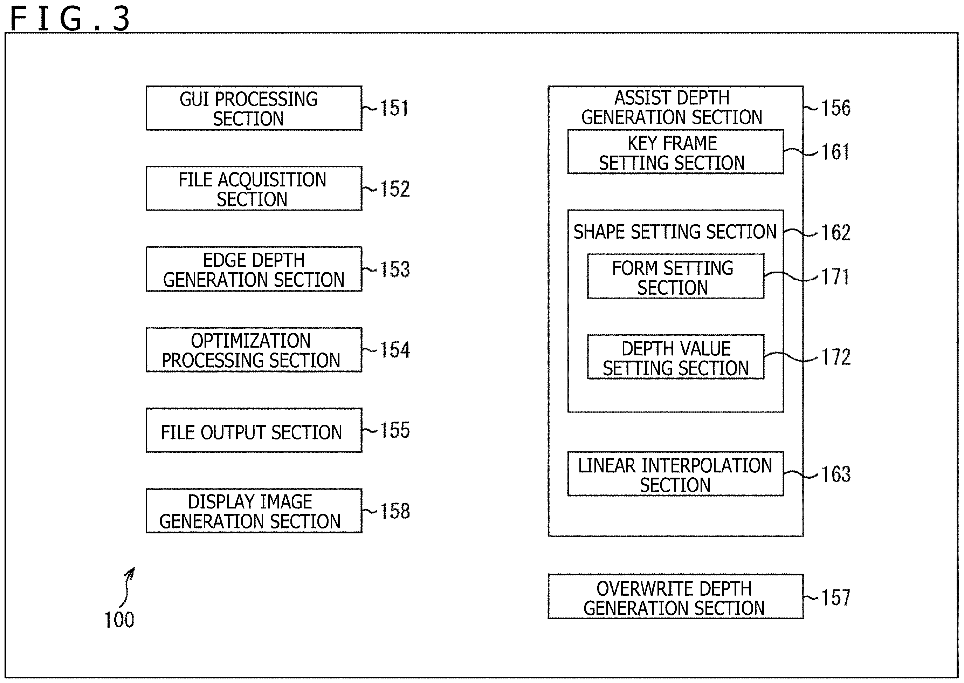

   Fig. 3 is a functional block diagram illustrating functions realized by the computer.
[Fig. 4]

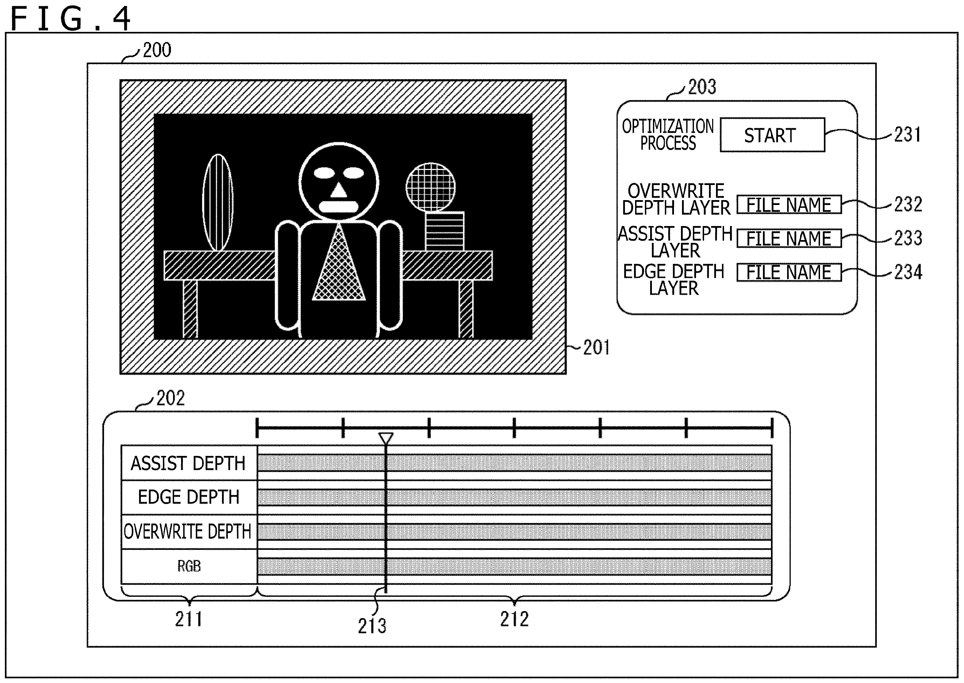

   Fig. 4 is a diagram illustrating an example of a depth editing screen.
[Fig. 5]

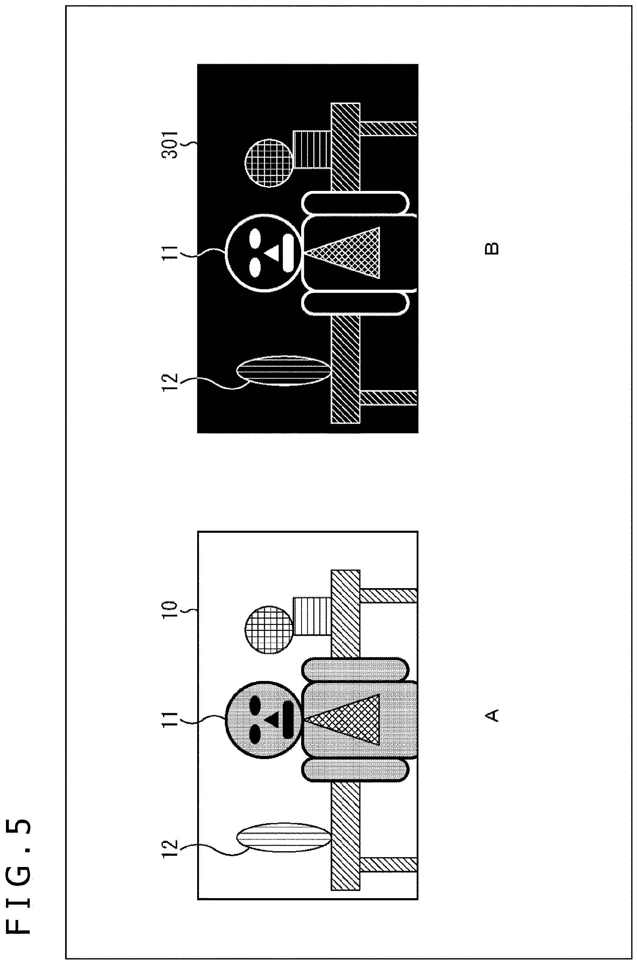

   Fig. 5 is a diagram illustrating an example of generation of an edge depth.
[Fig. 6]

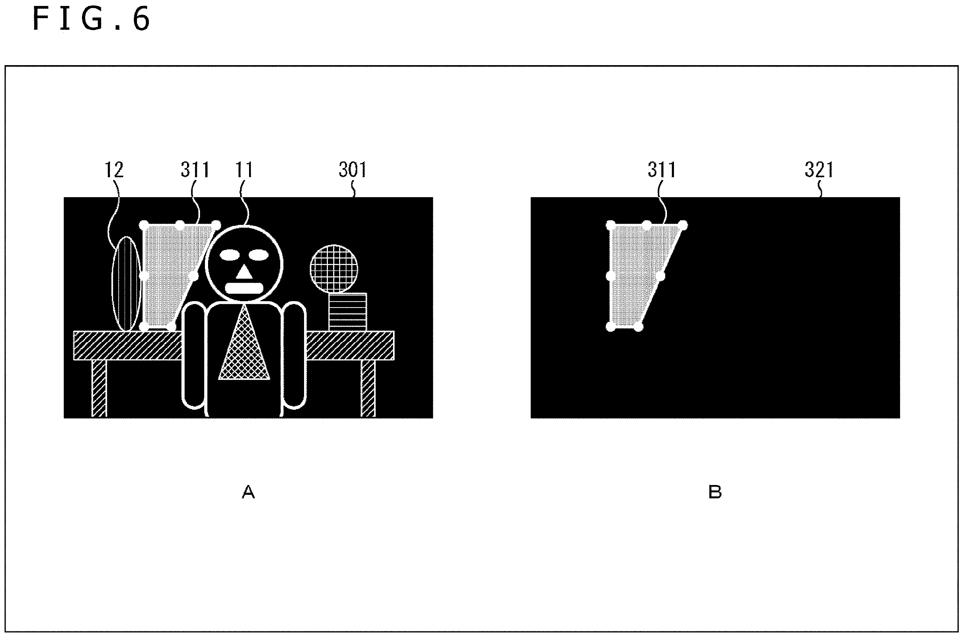

   Fig. 6 is a diagram illustrating an example of generation of an assist depth.
[Fig. 7]

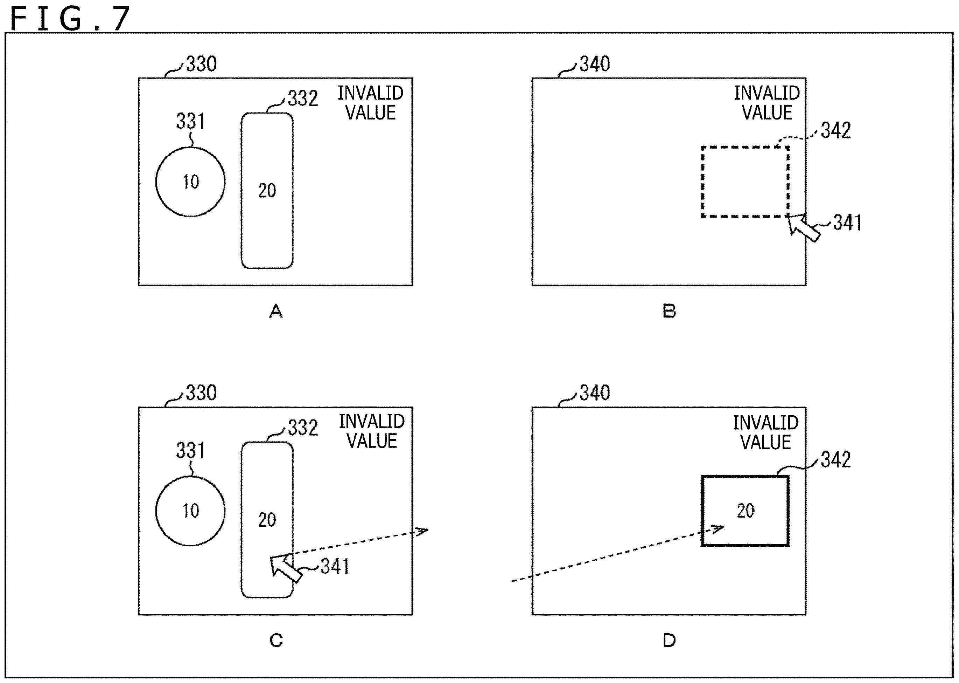

   Fig. 7 is a diagram illustrating an example of setting of depth values.
[Fig. 8]

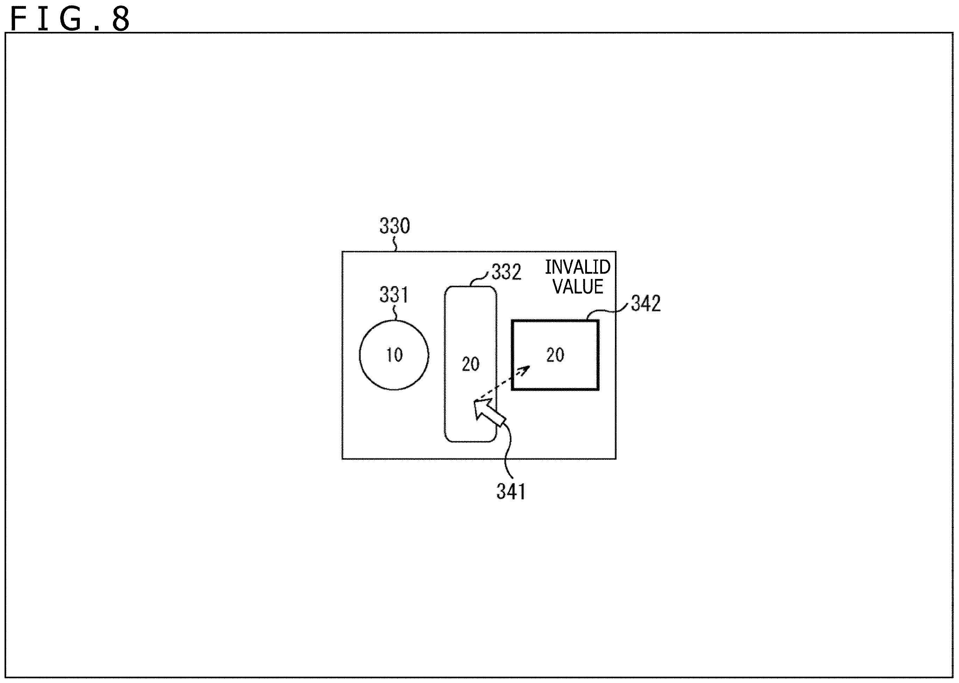

   Fig. 8 is a diagram illustrating an example of setting of a depth value.
[Fig. 9]

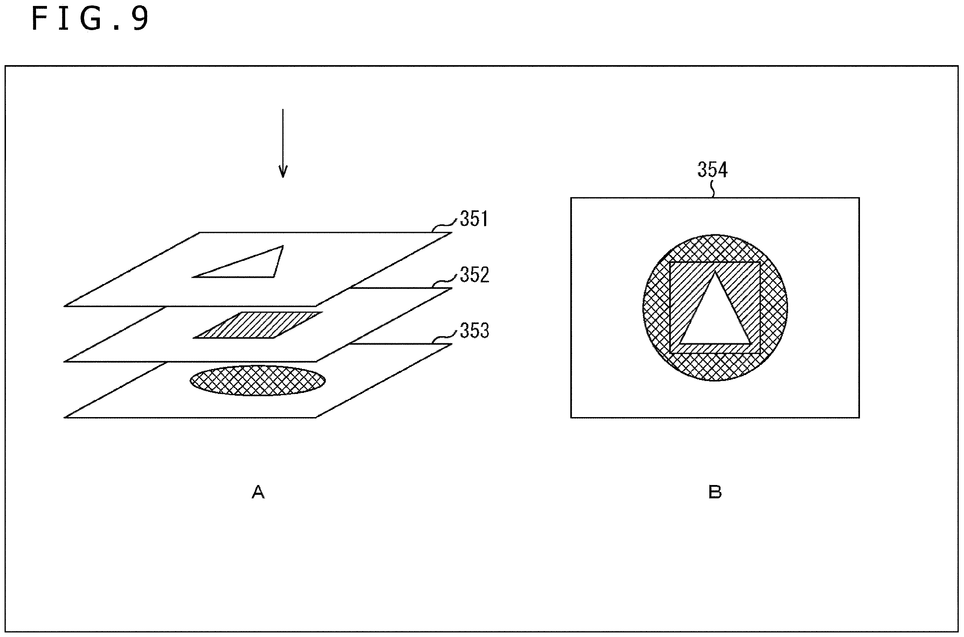

   Fig. 9 is a diagram illustrating an example of merging of layers.
[Fig. 10]

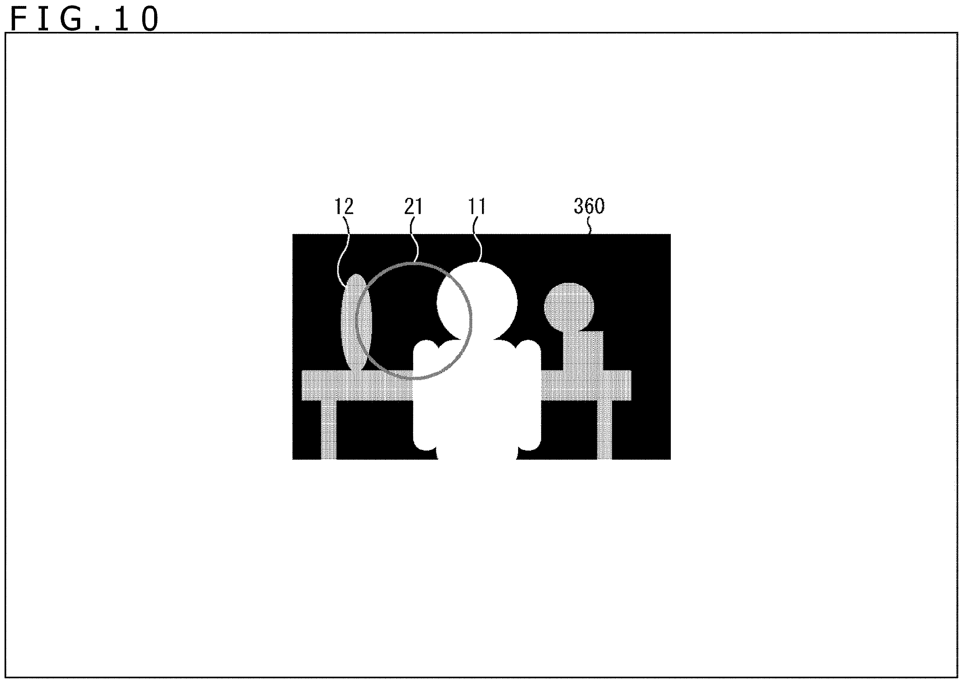

   Fig. 10 is a diagram illustrating an example of an output depth map.
[Fig. 11]

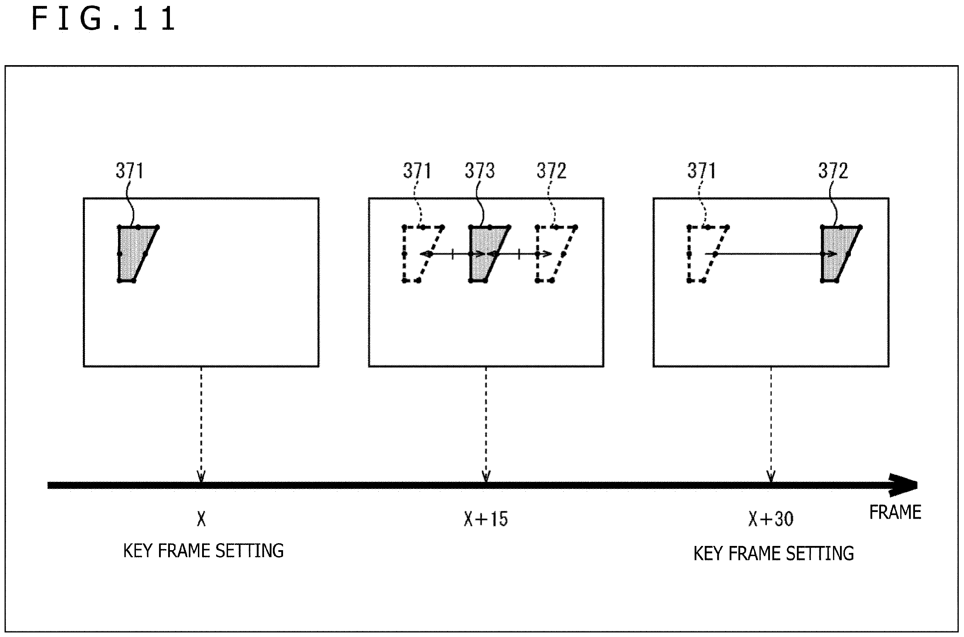

   Fig. 11 is a diagram illustrating an example of shape region interpolation.
[Fig. 12]

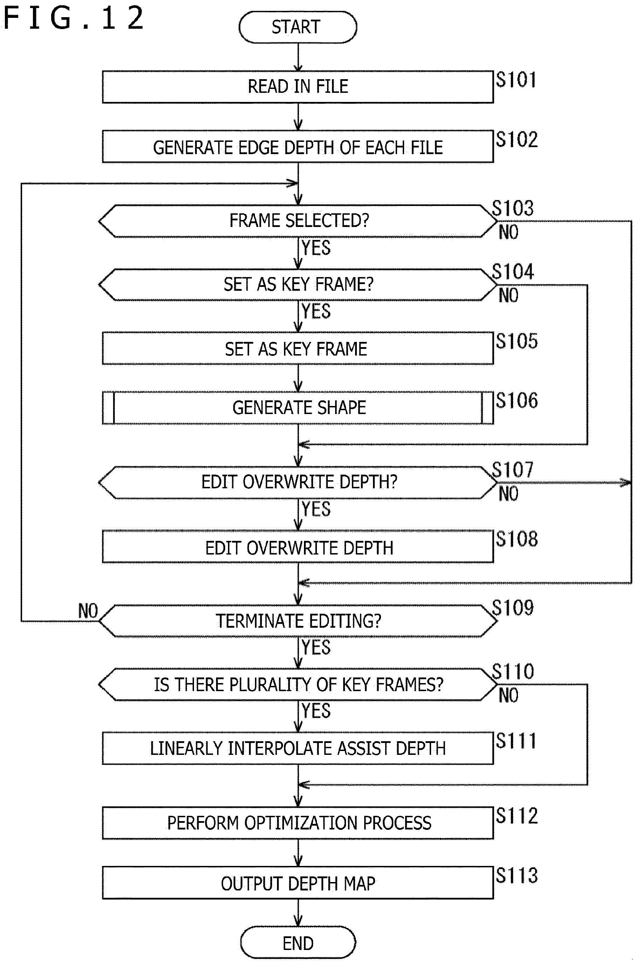

   Fig. 12 is a flowchart illustrating an example of a process flow performed during editing of a depth map.
[Fig. 13]

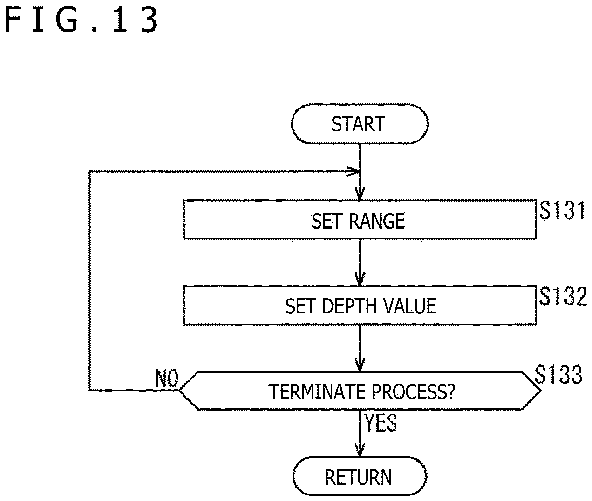

   Fig. 13 is a flowchart illustrating an example of a process flow performed during generation of a shape region.

### [Description of Embodiment]

A description will be given below of a mode for carrying out the present disclosure (hereinafter referred to as an embodiment). It should be noted that the description will be given in the following order.
1. Editing of depth map
2. First embodiment (computer)
3. Appendix

### <1. Editing of depth map>

### <Depth map>

A variety of research efforts have been carried out in recent years in association with an image processing technology for generating a depth map from parallax images of two left and right viewpoints or multiple viewpoints (refer, for example, to PTL 1). As for a framework of a passive sensing algorithm, for example, a method has been conceived of that eventually outputs a depth map by calculating a matching cost first, followed by devising the way to leave highly reliable information for each and making corrections. Also, a technique has been proposed that determines disparity values of pixels with an unknown depth by using a highly reliable depth map.

It should be noted, however, that a generated depth map does not always perfectly and correctly correspond to an image. For example, it is difficult to correctly derive a depth value of a subject which is difficult to detect by passive sensing or a depth value of a subject with no texture. Also, there can be a case where an incorrect depth value is derived due to a noise effect.

For example, a captured image 10 illustrated in A of Fig. 1 is an image captured of a person 11, an object 12, and the like. The person 11 is located forward (camera side). White represents a background and is the farthest from the camera (e.g., infinity). Portions indicated by diagonal lines, parallel lines, a hatched pattern, and the like are located between the person 11 and the background as seen from the camera.

A depth map 20 illustrated in B of Fig. 1 is a depth map generated from the captured image 10 or the like and basically includes depth values corresponding to the captured image 10. In the depth map 20, the smaller the depth value of each pixel (that is, the more forward (the more on the camera side) the pixel is located), the closer to white the pixel is represented as being, and the larger the depth value (that is, the more backward the pixel is located), the closer to black the pixel is represented as being. That is, the portion of the person 11 of the depth map 20 is represented as being white, the portions of the object 12 and the like are represented as being gray, and the portion of the background is represented as being black.

It should be noted, however, that, although the portion between the object 12 and the person 11 in a region enclosed by a frame 21 in B of Fig. 1 is a background portion and is, therefore, supposed to be represented as being black, an accurate depth value cannot be acquired due to absence of texture in B of Fig. 1, as a result of which the portion is represented as being gray as is the object 12.

### <Editing of depth map>

For this reason, it is intended to enable editing of a depth map. For example, an assist depth map is generated that includes depth data to be added to (merged with) a basic depth map. For example, an information processing apparatus includes an assist depth map generation section, and the assist depth map generation section generates an assist depth map that includes depth data to be added to (merged with) a basic depth map.

Here, the basic depth map is a depth map that includes depth values of a subject of a certain image. It should be noted, however, that the basic depth map can include a portion that does not correspond to a position of an actual subject in an actual case due to a measurement error or other causes. For example, a basic depth map is generated with use of the image or measuring a distance to the subject of the image.

The assist depth map is a depth map that includes depth data to be added to (merged with) the basic depth map. A merged depth map is generated by adding (merging) depth data of the assist depth map to (with) the basic depth map. That is, the basic depth map is edited with use of the assist depth map, and the merged depth map is a result of the editing. That is, this makes it possible to edit the depth map.

Also, the creation of assist information to be added to the basic depth map as a depth map allows the depth map to be edited by merging the depth maps with each other in this manner, which makes it possible to edit the depth map with more ease. Also, it is possible to manage target data to be edited (basic depth map) separately from editing data used for the editing (assist depth map), which makes it possible to perform processes such as update of editing contents and restoration of a pre-editing depth map with ease.

It should be noted that the assist depth map may include depth data to be added to (merged with) a local region of the basic depth map. For example, the assist depth map may be formed for a shape region which will be described later. This makes it possible to edit any local region of the basic depth map with more ease.

The assist depth map as described above may be generated on the basis of an instruction input on the basis of an UI (User Interface). In the information processing apparatus, for example, the assist depth map generation section may generate an assist depth map on the basis of user instruction information supplied from an acceptance section that accepts a user instruction, which is associated with generation of an assist depth map, input with use of a UI (User Interface). The use of the UI in this manner allows an instruction associated with generation of the assist depth map to be input with ease.

It should be noted that the above instruction may be input on the basis of a basic depth map displayed on the UI. For example, the acceptance section may accept a user instruction input into the basic depth map that is displayed on a display section as the UI. The input of an instruction on the basis of the basic depth map displayed in this manner allows an instruction associated with generation of the assist depth map to be input with ease.

Also, a basic depth map and an image (RGB image which will be described later) corresponding to the basic depth map may be displayed in a superimposed manner. In the information processing apparatus, for example, a superimposition processing section may superimpose a basic depth map and an image corresponding to the basic depth map one on the other and output the resultant image to the display section as a superimposed image. In the case of a depth map, the regions having the same depth value are represented as being the same color (same luminance). Accordingly, there can be a case where it is difficult to correctly find out, with a depth map alone, to which position (region including one or a plurality of pixels) of an image corresponding to the depth map each position in the depth map (in-frame position) corresponds. For example, in a case where there is a plurality of objects at the same position in a depth direction (having the same depth value), there is a possibility that the objects may be represented as a single object.

For this reason, the display of a basic depth map and an image that corresponds thereto in a superimposed manner allows the in-frame positions which are the respective positions in the map to be correctly identified with more ease and allows a depth map to be edited with more ease.

Also, a depth map may be edited (locally) for each partial region. For example, a partial region (shape region) may be set first, followed by the setting of a depth value in the shape region. That is, a range within which a depth value is to be edited may be specified, followed by the setting of a depth value of the region within the specified range. For example, the above acceptance section may accept the specification of an addition range within which depth data, which is input into the basic depth map displayed on the UI display section, is to be added and the specification of a depth value of the region within the specified addition range. The issuance of an editing instruction for each partial region in this manner allows a depth map to be edited locally with more ease.

It should be noted that the respective pixels in a partial region (shape region) may share a common depth value (have the same depth value). Naturally, there may be a plurality of depth values in a partial region (shape region). For example, the depth values of the respective pixels in a partial region (shape region) may be values that follow a given regularity. For example, the depth values may change uniformly in a given direction in the partial region (shape region) as does color gradation.

Also, a depth value in a partial region (shape region) may be specified by selecting another region. For example, if the user or the like specifies another region, the depth value of the specified in-frame position may be set as the depth value of the partial region (shape region) to be processed. For example, the acceptance section may accept the specification of the in-frame position outside the range of the partial region (shape region) (outside the addition range) of the basic depth map displayed on the display section, as a user instruction specifying the depth value of the in-frame position as the depth value of the region within the range. This makes it possible for the user or the like to specify the depth value in the partial region (shape region) with more ease.

Also, a basic depth map may correspond to a still image or to a video. In a case where the basic depth map corresponds to a video, the basic depth map may include a plurality of frames in a chronological order (i.e., group of basic depth maps corresponding to respective frame images). In that case, an assist depth map may be generated only for the basic depth maps corresponding to some frames (key frames which will be described later) of the video of all of the group of the basic depth maps. That is, in this case, an assist depth map is not generated for all the frames, which makes it possible to edit depth maps with more ease.

Then, in that case, an assist depth map may be generated (interpolated) for the basic depth map of another frame with use of the assist depth maps set for the key frames. For example, the information processing apparatus may include an interpolation processing section that interpolates the assist depth map of a frame between key frames by using the assist depth maps of the key frames. This makes it possible to generate an assist depth map corresponding to the frame between the key frames with more ease.

Also, an assist depth map may be generated as a layer different from that of the basic depth map. The separation of the layers in this manner allows the basic depth map and the assist depth map to be managed as data independent of each other with more ease. For example, it is possible to generate (edit) an assist depth map for use as editing data, without editing the basic depth map. Also, in the case of a video, for example, it is possible to realize copying or another process between frames of an assist depth map with ease. Also, the layering allows maps to be merged with more ease.

Further, a merged depth map may be generated by merging the basic depth map and an assist depth map whose layers are different. For example, the information processing apparatus may further include a merged depth map generation section that generates a merged depth map by merging the basic depth map and an assist depth map whose layers are different. This makes it possible to perform an optimization process.

It should be noted that, in a case where the basic depth map and the assist depth map have respective depth values of the same in-frame position, a merged depth map may be generated with use of the depth value of the basic depth map. That is, for example, in a case where the basic depth map has one depth value and the assist depth map has another depth value in the same pixel, priority may be given to the depth value of the basic depth map over the depth value of the assist depth map. This makes it possible to add depth values of the assist depth map only to portions with no depth value (with an invalid depth value) set in the basic depth map and, in portions with a depth value set in the basic depth map, keep the depth values unchanged.

This makes it possible, for example, to set a shape region with no concern over possible overlapping of the depth values with the basic depth map. In the case of a video, in particular, a common assist depth map can be used for a plurality of frames with a moving object (a plurality of frames with a varying distribution of depth values in the basic depth map). That is, because it is not necessary to deform or move a shape region to prevent the shape region from being superimposed on the moving object in each frame, it is possible to generate (edit) an assist depth map with ease.

It should be noted that the basic depth map may be a depth map that includes in-frame position depth values that are relatively highly reliable (e.g., whose reliability is equal to or higher than a given preset threshold). In the case of such a depth map, there may be an invalid value in portions with a depth value having low reliability (e.g., portions with little texture in the frame). The setting of a depth value to such portions with use of an assist depth map allows a more reliable depth map to be generated.

An in-frame position whose depth value is relatively highly reliable is an edge portion of a subject in the image corresponding to the basic depth map, and the basic depth map may be an edge depth map that includes the depth value of the edge portion. For example, whether or not an in-frame position is an edge portion of a subject in the image may be used as a reliability threshold. In that case, it is possible to edit a non-edge portion (portion with reliability lower than the threshold) of the edge depth map by using the assist depth map. It should be noted that the information processing apparatus may further include a basic depth map generation section that generates the edge depth map as a basic depth map.

Further, an overwrite depth map for updating the depth values of the basic depth map may be generated. For example, the information processing apparatus may further include an overwrite depth map generation section that generates an overwrite depth map that includes depth data for updating the depth values of the basic depth map. This makes it possible to change the depth values of the basic depth map.

The overwrite depth map may be generated in a layer different from that of the basic depth map. This makes it possible to manage the overwrite depth map as data independent of other depth maps with more ease, as in the case of the assist depth map. For example, it is possible to generate (edit) an overwrite depth map for use as editing data, without editing the basic depth map. Also, the layering allows the maps to be merged with more ease.

For example, in a case where the basic depth map and the overwrite depth map have respective depth values of the same in-frame position in the merging of the basic depth map and the overwrite depth map, the depth value of the overwrite depth map may be used. For example, in a case where the basic depth map and the overwrite depth map have respective depth values of the same in-frame position, the merged depth map generation section of the information processing apparatus may merge the basic depth map and the overwrite depth map whose layers are different from each other by using the depth of the overwrite depth map. The optimization process performed in such a manner allows a wrong depth value that occurs in the basic depth map due, for example, to optical reflection to be corrected.

### <2. First embodiment>

### <Computer>

A description will be given next of a device that executes such an application program as described above. Fig. 2 is a diagram illustrating examples of main components of a computer which is an embodiment of an image processing apparatus to which the present technology is applied. A computer 100 illustrated in Fig. 2 is an apparatus that installs and executes an application program (software) for editing depth data. Here, the computer includes not only computers that are built into dedicated hardware but also, for example, general-purpose personal computers capable of performing various functions as a result of installation of a variety of programs, and the like. The computer 100 edits a depth map (basic depth map) by various methods described above, for example, in <1. Editing of depth map> by executing an application program. This makes it possible to generate a merged depth map (output depth map) by editing the basic depth map.

It should be noted that Fig. 2 illustrates main part of processing sections, data flows, and the like, and all of the processing sections, data flows, and the like are not necessarily illustrated. That is, in the computer 100, there may be processing sections that are not illustrated in Fig. 2 as blocks, and there may be processes and data flows that are not illustrated in Fig. 2 as arrows and the like.

In the computer 100 illustrated in Fig. 2, a CPU (Central Processing Unit) 101, a ROM (Read Only Memory) 102, and a RAM (Random Access Memory) 103 are connected to each other via a bus 104.

An input/output interface 110 is also connected to the bus 104. An input section 111, an output section 112, a storage section 113, a communication section 114, and a drive 115 are connected to the input/output interface 110.

The input section 111 includes, for example, a keyboard, a mouse, a microphone, a touch panel, input terminals, and the like. The output section 112 includes, for example, a monitor, a speaker, output terminals, and the like. The storage section 113 includes, for example, a hard disk, a RAM disk, a non-volatile memory, and the like. The communication section 114 includes, for example, a network interface. The drive 115 drives a removable recording medium 121 such as a magnetic disk, an optical disk, a magneto-optical disk, or a semiconductor memory.

In the computer 100 configured as described above, for example, the CPU 101 loads an application program stored in the storage section 113 into the RAM 103 via the input/output interface 110 and the bus 104 for execution, thus performing the above series of processes. Data and the like required for the CPU 101 to execute various processes are also stored in the RAM 103 as appropriate.

The application program executed by the computer 100 can be recorded, for example, to the removable recording medium 121 as a package medium or the like for application. In that case, it is possible to install the application program to the storage section 113 via the input/output interface 110 by inserting the removable recording medium 121 into the drive 115.

Also, the application program can be provided via a wired or wireless transmission medium such as a local area network, the Internet, or digital satellite broadcasting. In that case, the application program can be received by the communication section 114 and installed to the storage section 113.

In addition to the above, the application program can also be installed in advance to the ROM 102 or the storage section 113.

Fig. 3 is a functional block diagram illustrating, as functional blocks, functions realized by the computer 100 as a result of execution of the application program. The computer 100 realizes a function of generating a depth map from an image and editing the depth map by executing the application program.

It should be noted that, at this time, the computer 100 generates a depth map that includes depth values of relatively highly reliable portions from an image and estimates depth values of portions with relatively low reliability on the basis of the depth map and the like, thus generating a depth map corresponding to the image as described, for example, in PTL 1. This makes it possible to generate a more reliable depth map.

As illustrated in Fig. 3, the computer 100 can have functional blocks such as a GUI processing section 151, a file acquisition section 152, an edge depth generation section 153, an optimization processing section 154, a file output section 155, an assist depth generation section 156, an overwrite depth generation section 157, and a display image generation section 158 by executing the application program. Each function block will be described below.

The GUI processing section 151 performs processes associated with a GUI displayed on the output section 112 (e.g., monitor thereof). For example, if the input section 111 is operated (e.g., if an instruction is input) on the basis of the GUI for editing the depth map displayed on the output section 112 (e.g., monitor thereof), the GUI processing section 151 can perform a process commensurate with the accepted operation (instruction). It should be noted that the GUI processing section 151, the input section 111, and the monitor of the output section 112 will also be referred to collectively as a UI (User Interface). Also, the GUI processing section 151 and the input section 111 will also be referred to collectively as an acceptance section.

The file acquisition section 152 performs processes associated with acquisition of files. For example, the file acquisition section 152 acquires an image (e.g., captured image) file associated with the depth map to be edited. For example, the file acquisition section 152 can acquire an image file input from equipment external to the computer 100 via the input section 111. Also, the file acquisition section 152 can acquire an image file stored in the storage section 113. Further, the file acquisition section 152 can acquire an image file sent from another apparatus via the communication section 114. Also, the file acquisition section 152 can read out and acquire an image file recorded in the removable recording medium 121 via the drive 115. The file acquisition section 152 supplies the image file acquired by any method to other functional blocks.

The edge depth generation section 153 performs processes associated with generation of an edge depth. An edge depth map is a depth map that includes depth values of portions near an image edge. In general, an image edge portion is a portion where relatively highly reliable depth values can be acquired. That is, the edge depth generation section 153 derives depth values for the region where relatively highly reliable depth values can be acquired and generates a depth map (edge depth map) that includes the depth values. The edge depth generation section 153 generates, by using an image file acquired by the file acquisition section 152, an edge depth map corresponding to the image.

The edge depth map is subject to editing. That is, the edge depth map is used as a basic depth map. It should be noted that an invalid value is set as the depth value in regions of the edge depth map corresponding to non-edge portions of the image. The depth map corresponding to the image (output depth map) is generated by estimating the depth values of the portions where the invalid value is set (i.e., pixels with unknown depth). It should be noted that the process for estimating the depth values will also be referred to as an optimization process (or semi-globalization process).

The optimization processing section 154 performs processes associated with the optimization process. That is, the optimization processing section 154 estimates the depth values of pixels with unknown depth in the edge depth map. The estimation can be made by any method. For example, the method described in PTL 1 can be used. The optimization processing section 154 generates a single-layer depth map by performing the optimization process. This depth map may be used as a final output depth map. It should be noted that the optimization processing section 154 may merge depth maps of a plurality of layers for use as an output depth map by performing the optimization process.

The file output section 155 performs processes associated with output of a file. For example, the file output section 155 outputs the output depth map (merged depth map) generated by the optimization processing section 154. For example, the file output section 155 can output the output depth map to equipment external to the computer 100 via the output section 112. Also, the file output section 155 can cause the storage section 113 to store the output depth map. Further, the file output section 155 can send the output depth map addressed to another apparatus via the communication section 114. Also, the file output section 155 can cause the removable recording medium 121 to record therein the output depth map via the drive 115.

The assist depth generation section 156 performs processes associated with generation of an assist depth map. The assist depth map is a depth map that includes depth data to be added to (merged with) a basic depth map and is a depth map for editing the basic depth map. The assist depth generation section 156 generates the assist depth map on the basis of, for example, a user instruction or the like accepted via the GUI processing section 151 or the like.

The overwrite depth generation section 157 performs processes associated with generation of an overwrite depth map. The overwrite depth map is a depth map that includes depth data for updating depth values of a basic depth map and is a depth map for editing the basic depth map. The overwrite depth generation section 157 generates the overwrite depth map on the basis of, for example, a user instruction or the like accepted via the GUI processing section 151 or the like.

The display image generation section 158 generates a display image to be displayed on the output section 112 (e.g., monitor thereof). For example, the display image generation section 158 generates as a display image a GUI (depth editing screen which will be described later) for editing a depth map. Then, the display image generation section 158 causes the output section 112 (e.g., monitor thereof) to display the generated display image.

For example, the display image generation section 158 can generate a display image by using an edge depth map (basic depth map) generated by the edge depth generation section 153. For example, the display image generation section 158 can generate a depth editing screen (depth editing screen on which an edge depth map is displayed) including the edge depth map (basic depth map). Also, the display image generation section 158 can generate a display image by using an assist depth map generated by the assist depth generation section 156. For example, the display image generation section 158 can generate a depth editing screen (depth editing screen on which an assist depth map is displayed) including the assist depth map. Further, the display image generation section 158 can generate a display image by using an overwrite depth map generated by the overwrite depth generation section 157. For example, the display image generation section 158 can generate a depth editing screen (depth editing screen on which an overwrite depth map is displayed) including the overwrite depth map.

It should be noted that the display image generation section 158 can generate, by using a superimposed image obtained by superimposing an edge depth map (basic depth map) and an RGB image corresponding to the edge depth map one on the other, a display image (depth editing screen including the superimposed image). It should be noted that the display image generation section 158 can further superimpose an assist depth map or an overwrite depth map on the superimposed image. That is, the display image generation section 158 can function as a superimposition processing section.

### <Assist depth generation section>

The assist depth generation section 156 includes a key frame setting section 161, a shape setting section 162, and a linear interpolation section 163.

The key frame setting section 161 performs processes associated with setting of a key frame. The key frame is a frame of a video for which an assist depth map is to be generated (i.e., frame for which an edge depth map is to be edited).

The shape setting section 162 performs processes associated with generation of a shape region which is a partial region (local portion) where a depth value to be added to an edge depth map (basic depth map) is set.

The linear interpolation section 163 interpolates an assist depth map (shape region) in a frame between key frames. For example, the linear interpolation section 163 performs linear interpolation.

The shape setting section 162 includes a form setting section 171 and a depth value setting section 172. The form setting section 171 performs processes associated with setting of a form (outer frame) of a shape region (setting of addition range), for example. For example, the form setting section 171 generates a form (outer frame) of a shape region on the basis of a user instruction or the like accepted via the GUI processing section 151 or the like (i.e., a user instruction associated with the form of the shape region input into the basic depth map displayed on the monitor (display section) of the output section 112). The depth value setting section 172 performs processes associated with setting of a depth value within the addition range set by the form setting section 171. For example, the depth value setting section 172 sets a depth value in a shape region on the basis of a user instruction or the like accepted via the GUI processing section 151 or the like (i.e., a user instruction associated with the depth value of the shape region input into the basic depth map displayed on the monitor (display section) of the output section 112).

### <Depth editing screen>

Fig. 4 illustrates an example of a GUI for editing a depth map generated by the display image generation section 158 in Fig. 3 and displayed on the output section 112. A depth editing screen 200 illustrated in Fig. 4 is an example of a GUI for editing the depth map. As illustrated in Fig. 4, the depth editing screen 200 includes a depth map display section 201, a layer editing section 202, and an optimization control section 203.

A depth map to be edited (preview of the edited depth map) is displayed in the depth map display section 201. In a case where depth maps are created in a plurality of layers, the depth map display section 201 can also display depth maps of the respective layers (or depth maps of some of the layers) in a superimposed manner (in a translucent manner). Also, the depth map display section 201 can display an RGB image and a depth map in a superimposed manner (in a translucent manner). Here, the RGB image is, for example, an image including luminance components, color components, and the like which is not but corresponds to a depth map. The RGB image is, for example, a captured image. It should be noted that the RGB image may be a RAW image or a YUV image. Also, the RGB image may be a color image or a monochrome image. In a case where the RGB image is a RAW image or a YUV image, the RAW image or the YUV image is converted into an RGB image first and then displayed in the depth map display section 201.

The layer editing section 202 is a region where editing task operations are performed on a layer-by-layer basis. The layer editing section 202 includes a layer selection field 211 and a time line 212. The layer selection field 211 is a GUI for selecting (specifying) a layer for which to perform an editing task. The time line 212 is a GUI that horizontally indicates a video sequence. That is, the RGB image, the edge depth map, the assist depth map, and the overwrite depth map may be a single-frame still image or a video that includes a plurality of frames. In the time line 212, for example, the frame to be processed is selected by specifying the position of a pointer 213 (horizontal position).

The optimization control section 203 is a GUI for the optimization process. An execute button 231 and file name input fields 232 to 234 are provided in the optimization control section 203. A file name of an overwrite depth map used for the optimization process is input into the file name input field 232. A file name of an assist depth map used for the optimization process is input into the file name input field 233. A file name of an edge depth map used for the optimization process is input into the file name input field 234. When the execute button 231 is operated, the optimization process is performed with use of the depth maps specified in these input fields.

### <Generation of edge depth map>

The edge depth generation section 153 generates, for example, an edge depth map 301 as illustrated in B of Fig. 5 from a captured image 10 as illustrated in A of Fig. 5. In the edge depth map 301, only depth values of portions near edges of the captured image are set. An invalid value is set in other portions, i.e., in each pixel of black portions in the edge depth map 301 illustrated in B of Fig. 5.

The edge depth map 301 is edited, for example, in such a manner that depth values are added as illustrated in A of Fig. 6. At this time, a partial region called a shape region is set, and a depth value is set for each shape region as illustrated in A of Fig. 6. That is, the depth value is edited (added) locally (for each partial region). In the case of A of Fig. 6, a shape region 311 is set.

For example, the user specifies a form and a depth value of the shape region 311 in the depth map display section 201 of the depth editing screen 200 in Fig. 4, as illustrated in A of Fig. 6. The form setting section 171 sets the form of the shape region 311 on the basis of the instruction. Any form can be set. The shape region 311 may be in an exact form specified by the user in the depth editing screen 200 or in the form of a straight line, a rectangle, a polygon, or the like. When the form of the shape region 311 is set, the depth value setting section 172 sets the depth value on the basis of the instruction.

The shape region 311 set in this manner is created as an assist depth map 321 (in a layer) different from (that of) the edge depth map 301 which is a basic depth map as illustrated in B of Fig. 6.

It should be noted that the depth value of the shape region 311 can be set by any method. A numerical value may be input by the user or the like, or the depth value of a position (in-frame position) specified in the depth editing screen 200 may be copied.

It is assumed, for example, that the depth value of a region 331 is 10, the depth value of a region 332 is 20, and the depth value of other regions is invalid in an edge depth map 330 as illustrated in A of Fig. 7. Meanwhile, the user sets the form of a shape region 342 by operating a cursor 341 in an assist depth map 340 as illustrated in B of Fig. 7. Next, when the user specifies a pixel in the region 332 by operating the cursor 341 in the edge depth map 330 as illustrated in C of Fig. 7, the depth value (i.e., 20) of the pixel is set in (copied to) the shape region 342 of the assist depth map 340 as illustrated in D of Fig. 7. That is, the depth value setting section 172 sets the depth value in the shape region 342 as the depth value of the specified pixel in the region 332 on the basis of a user instruction or the like accepted via the GUI processing section 151 or the like (that is, on the basis of the specification of the pixel in the region 332). It is possible for the user to set the depth values of the assist depth map with more ease by setting the depth value of the shape region with use of such a GUI function (also referred to as an eyedropper function).

It should be noted that a depth map may have a single layer. In that case, the edge depth map 330 which is a basic depth map is edited. That is, as illustrated in Fig. 8, when the user sets the form of the shape region 342 in a region with an invalid value in the edge depth map 330 and specifies a pixel of the region 332, the depth value thereof is copied to the shape region 342. In this case, too, the depth value setting section 172 sets the depth value in the shape region 342 as the depth value of the specified pixel in the region 332 on the basis of a user instruction or the like accepted via the GUI processing section 151 or the like (that is, on the basis of the specification of the pixel in the region 332). That is, copying is performed within the same depth map.

In a case where the depth values of the edge depth map 330 are to be edited, an overwrite depth map may be used. For example, in a case where an unintentional error occurs in the edge depth map due to an effect of noise at the time of image capturing or to an effect of a subject having an intricate pattern, the error may be corrected with use of the depth values of the overwrite depth map.

The edge depth map, the assist depth map, and the overwrite depth map are merged together by the optimization process. These maps may be created as different layers. In that case, the layers are merged by superimposition as a result of the optimization process as illustrated in A of Fig. 9. In A of Fig. 9, an overwrite depth layer 351 is the layer of the overwrite depth map. An edge depth layer 352 is the layer of the edge depth map. An assist depth layer 353 is the layer of the assist depth map.

The overwrite depth layer 351 has the highest priority during the optimization process. An initial value of each pixel of this layer is an invalid value or a value same as that of the edge depth layer 352. The edge depth layer 352 has higher priority than the assist depth layer during the optimization process. The assist depth layer 353 has the lowest priority. The value written to this layer is adopted only in a case where the values of the overwrite depth layer 351 and the edge depth layer 352 are invalid. An initial value thereof is an invalid value or a value same as that of the edge depth layer.

That is, the layers are merged together by the optimization process, as a result of which the depth values of the respective layers are superimposed one on the other as seen from above as indicated by an arrow in A of Fig. 9. That is, an output depth map 354 is generated in which the depth values are superimposed as illustrated in B of Fig. 9. That is, the depth value of the assist depth layer 353 is valid only in regions where the depth values of both the overwrite depth layer 351 and the edge depth layer 352 are invalid. It should be noted that the depth map may have a single-layer structure.

Fig. 10 illustrates an example of a merged depth map (output depth map) generated by such an optimization process. In an output depth map 360 illustrated in Fig. 10, the portion between the object 12 and the person 11 in the region enclosed by the frame 21 is represented as being black. That is, the depth value which has been incorrect in the depth map 20 illustrated in B of Fig. 1 is now corrected to a correct value. The depth map can be edited in this manner.

It should be noted that, in the case of a video, in a case where it is not necessary to change the in-frame position of a written shape region, the in-frame position may be left unchanged, and in a case where it is necessary to change the in-frame position, the shape region is input, for example, as key frames. For example, in a case where the shape region is input with a first frame and a 30th frame set as key frames as illustrated in Fig. 11, the optimization process may be performed by calculating an amount of movement of the shape region for each frame of each layer from the set key frames during the optimization process. This makes it possible to issue a correction instruction with relative ease. Also, the amount of movement of the shape region between the frames may be calculated by a linear process or by a nonlinear process that tracks the amount of movement of the screen as a whole.

In the case of the example in Fig. 11, a frame X is set as a key frame, and a shape region 371 is set. Also, a frame X+30 is set as a key frame, and a shape region 372 is set. On the basis of these key frames, a shape region 373 is interpolated at an intermediate position (in-frame position) between the shape region 371 and the shape region 372 in a frame X+15.

Also, as for an algorithm of the optimization process, reference may be made only to the depth values as described in PTL 1, and the optimization process may be performed with use of the input RGB value and depth value as guidance as described, for example, in Jonathan T Barron and Ben Poole, "The fast bilateral solver," ECCV, 2016 (referred to as Non-Patent Literature 2).

The configuration as described above allows a depth map to be edited as described in <1. Editing of depth map>.

### <Process flow>

A description will be given below of an example of a process flow performed during editing of a depth map with reference to a flowchart in Fig. 12.

When the process begins, the file acquisition section 152 reads in a file and acquires an RGB image in step S101. In step S102, the edge depth generation section 153 generates an edge depth of each frame.

In step S103, the assist depth generation section 156 determines whether or not a frame has been selected. In a case where it is determined that a frame has been selected, the process proceeds to step S104. Also, in step S104, the key frame setting section 161 determines whether or not to set the frame as a key frame. In a case where it is determined that the frame is to be set as a key frame, the process proceeds to step S105.

In step S105, the key frame setting section 161 sets the frame as a key frame. In step S106, the shape setting section 162 generates a shape region in the frame.

When the process in step S106 ends, the process proceeds to step S107. Also, in a case where it is determined in step S104 that the frame is not to be set as a key frame, the process proceeds to step S107.

In step S107, the overwrite depth generation section 157 determines whether or not to edit an overwrite depth map. In a case where it is determined that an overwrite depth map is to be edited, the process proceeds to step S108. In step S108, the overwrite depth generation section 157 edits an overwrite depth map.

When the process in step S108 ends, the process proceeds to step S109. Also, in a case where it is determined in step S107 that an overwrite depth map is not to be edited, the process proceeds to step S109. Further, in a case where it is determined in step S103 that a frame has not been selected, the process proceeds to step S109.

In step S109, the assist depth generation section 156 determines whether or not to terminate the editing of the depth map. In a case where it is determined that the editing of the depth map is to be continued, the process returns to step S103, and the subsequent steps are repeated. Also, in a case where it is determined in step S109 that the editing of the depth map is to be terminated, the process proceeds to step S110.

In step S110, the linear interpolation section 163 determines whether or not there is a plurality of key frames. In a case where it is determined that there is a plurality of key frames, the process proceeds to step S111. In step Sill, the linear interpolation section 163 interpolates (e.g., linearly interpolates) an assist depth map (shape region) and generates an assist depth map (shape region) in another frame between the key frames.

When the process in step S111 ends, the process proceeds to step S112. Also, in a case where it is determined in step S112 that there is not a plurality of key frames, the process proceeds to step S112.

In step S112, the optimization processing section 154 performs the optimization process and generates an output depth map having a single-layer structure. In step S113, the file output section 155 outputs the generated output depth map.

A description will next be given of an example of a process flow performed in step S106 during the generation of a shape region with reference to a flowchart in Fig. 13.

When the process begins, the form setting section 171 of the shape setting section 162 sets a range (outer form) of a shape region in step S131. In step S132, the depth value setting section 172 sets a depth value in the region within the range set in step S131.

In step S133, the shape setting section 162 determines whether or not to terminate the process. In a case where it is determined that the process is not to be terminated, that is, another shape region is to be set, the process returns to step S131, and the subsequent steps are repeated. Also, in a case where it is determined in step S133 that the process is to be terminated, the process returns to Fig. 12.

The performance of each process as described above makes it possible to edit a depth map as described in <1. Editing of depth map>.

### <3. Appendix>

### <Hardware>

The above series of processes can be performed by software (application program) or hardware.

### <Application target of present technology>

The present technology is applicable to any configuration. For example, the present technology can be implemented as part of the configuration of an apparatus, such as a processor as a system LSI (Large Scale Integration) or the like, a module using a plurality of processors or the like, a unit using a plurality of modules or the like, or a set including a unit and other additional functions.

Also, for example, the present technology is applicable to a network system that includes a plurality of apparatuses. For example, the present technology may be implemented as cloud computing that handles processes in a shared and collaborative manner among a plurality of apparatuses via a network. For example, the present technology may be implemented in a cloud service that provides services to any terminal such as a computer, a portable information processing terminal, or an IoT (Internet of Things) device.

It should be noted that, in the present specification, a system represents a set of a plurality of components (e.g., apparatuses, modules (parts)), and it does not matter whether or not all the components are provided in the same housing. Accordingly, a plurality of apparatuses accommodated in separate housings and connected to each other via a network and a single apparatus having a plurality of modules accommodated in a single housing are both systems.

### <Fields and uses to which the present technology is applicable>

A system, an apparatus, a processing section, or the like to which the present technology is applied can be used in any fields, examples of which include traffic, medicine, crime prevention, agriculture, the livestock industry, mining, the cosmetic industry, factories, household electrical appliances, meteorology, and natural surveillance. Also, the present technology can be used for any purposes.

### <Others>

Embodiments of the present technology are not limited to the embodiment described above and can be modified in various manners without departing from the gist of the present technology.

For example, a component that has been described as a single apparatus (or processing section) may be divided into a plurality of apparatuses (or processing sections). Conversely, components that have been described above as a plurality of apparatuses (or processing sections) may be combined into a single apparatus (or processing section). Also, a component other than the above may naturally be added to a component of each apparatus (or processing section). Further, as long as the configuration and operation of the system as a whole remain substantially the same, some of the components of one apparatus (or processing section) may be included in components of another apparatus (or another processing section).

Also, for example, the above program may be executed in a freely-selected apparatus. In that case, the apparatus is only required to have necessary functions (e.g., functional blocks) to be able to acquire necessary information.

Also, for example, each step of one flowchart may be performed by one apparatus or by a plurality of apparatuses in a shared manner. Further, in a case where a plurality of processes is included in one step, the plurality of processes may be performed by one apparatus or by a plurality of apparatuses in a shared manner. In other words, the plurality of processes included in one step can be performed as processes of a plurality of steps. Conversely, the processes described as a plurality of steps can be performed together as one step.

Also, for example, in a program executed by a computer, processes of steps for describing the program may be performed chronologically according to the sequence described in the present specification. Alternatively, the processes may be performed in parallel or individually at a necessary timing such as when called. That is, as long as no inconsistency arises, the processes of the respective steps may be performed in a sequence different from the sequence described above. Further, the processes of the steps for describing the program may be performed in parallel with processes of another program or may be combined with processes of another program and performed.

Also, for example, a plurality of technologies associated with the present technology can be implemented independently of each other and alone as long as no inconsistency arises. Naturally, a plurality of present technologies can be implemented together. For example, part or whole of the present technology described in any one of embodiments can be implemented in combination with part or whole of the present technology described in another embodiment. Also, any part or whole of the above present technology can be implemented together with another technology not described above.

It should be noted that the present technology can also adopt the following configurations.
(1) An information processing apparatus including:
   an assist depth map generation section adapted to generate an assist depth map that includes depth data to be added to a basic depth map.
(2) The information processing apparatus according to (1), in which
   the assist depth map includes the depth data to be added to a local region of the basic depth map.
(3) The information processing apparatus according to (2), in which
   the assist depth map generation section generates the assist depth map on the basis of user instruction information supplied from an acceptance section that accepts a user instruction, the user instruction being associated with generation of the assist depth map and being input with use of a UI (User Interface).
(4) The information processing apparatus according to (3), in which
   the acceptance section accepts the user instruction input into the basic depth map displayed on a display section as the UI.
(5) The information processing apparatus according to (4), further including:
   a superimposition processing section adapted to superimpose the basic depth map and an image corresponding to the basic depth map one on the other and output the resultant image to the display section as a superimposed image.
(6) The information processing apparatus according to (4) or (5), in which
   the acceptance section accepts a specification of an addition range within which depth data is to be added and a specification of a depth value of a region within the specified addition range, the specifications being input into the basic depth map displayed on the display section.
(7) The information processing apparatus according to (6), in which
   the acceptance section accepts a specification of an in-frame position outside the addition range of the basic depth map displayed on the display section, as the user instruction specifying a depth value of the in-frame position as the depth value of the region within the addition range.
(8) The information processing apparatus according to any one of (2) to (7), in which
   the assist depth map generation section generates the assist depth map for key frames of a video.
(9) The information processing apparatus according to (8), further including:
   an interpolation processing section adapted to interpolate the assist depth map of a frame between the key frames by using the assist depth maps of the key frames.
(10) The information processing apparatus according to any one of (1) to (9), in which
   the assist depth map generation section generates the assist depth map as a layer different from that of the basic depth map.
(11) The information processing apparatus according to (10), further including:
   a merged depth map generation section adapted to generate a merged depth map by merging the basic depth map and the assist depth map whose layers are different from each other.
(12) The information processing apparatus according to (11), in which,
   in a case where the basic depth map and the assist depth map have respective depth values in a same in-frame position, the merged depth map generation section generates the merged depth map by using the depth value of the basic depth map.
(13) The information processing apparatus according to (12), in which
   the basic depth map includes in-frame position depth values whose reliability is equal to or higher than a threshold.
(14) The information processing apparatus according to (13), in which
   the reliability threshold is a threshold for determining that an in-frame position is an edge portion of a subject in an image, and
   the basic depth map is an edge depth map that includes a depth value of the edge portion.
(15) The information processing apparatus according to (14), further including:
   a basic depth map generation section adapted to generate the edge depth map as the basic depth map.
(16) The information processing apparatus according to any one of (1) to (15), further including:
   an overwrite depth map generation section adapted to generate an overwrite depth map that includes depth data for updating a depth value of the basic depth map.
(17) The information processing apparatus according to (16), in which
   the overwrite depth map generation section generates the overwrite depth map in a layer different from that of the basic depth map.
(18) The information processing apparatus according to (17), further including:
   a merged depth map generation section adapted to merge, in a case where the basic depth map and the overwrite depth map have respective depth values in a same in-frame position, the basic depth map and the assist depth map whose layers are different from each other by using the depth value of the overwrite depth map.
(19) An information processing method including:
   generating an assist depth map that includes depth data to be added to a basic depth map.
(20) A program for causing a computer to function as:
   an assist depth generation section adapted to generate an assist depth map that includes depth data to be added to a basic depth map.

### [Reference Signs List]

- 100:: Computer
- 151:: GUI processing section
- 152:: File acquisition section
- 153:: Edge depth generation section
- 154:: Optimization processing section
- 155:: File output section
- 156:: Assist depth generation section
- 157:: Overwrite depth generation section
- 158:: Display image generation section
- 161:: Key frame setting section
- 162:: Shape setting section
- 163:: Linear interpolation section
- 171:: Form setting section
- 172:: Depth value setting section
- 200:: Depth editing screen
- 201:: Depth map display section
- 202:: Layer editing section
- 203:: Optimization control section
- 211:: Layer selection field
- 212:: Time line
- 231:: Execute button
- 232 to 234:: File name input field
- 301:: Edge depth
- 311:: Shape region
- 321:: Assist depth
- 351:: Overwrite depth layer
- 362:: Edge depth layer
- 353:: Assist depth layer
- 354:: Output layer
- 360:: Output depth map

## Claims

1. An information processing apparatus comprising:
an assist depth map generation section adapted to generate an assist depth map that includes depth data to be added to a basic depth map.

2. The information processing apparatus according to claim 1, wherein
the assist depth map includes the depth data to be added to a local region of the basic depth map.

3. The information processing apparatus according to claim 2, wherein
the assist depth map generation section generates the assist depth map on a basis of user instruction information supplied from an acceptance section that accepts a user instruction, the user instruction being associated with generation of the assist depth map and being input with use of a UI (User Interface).

4. The information processing apparatus according to claim 3, wherein
the acceptance section accepts the user instruction input into the basic depth map displayed on a display section as the UI.

5. The information processing apparatus according to claim 4, further comprising:
a superimposition processing section adapted to superimpose the basic depth map and an image corresponding to the basic depth map one on the other and output the resultant image to the display section as a superimposed image.

6. The information processing apparatus according to claim 4, wherein
the acceptance section accepts a specification of an addition range within which depth data is to be added and a specification of a depth value of a region within the specified addition range, the specifications being input into the basic depth map displayed on the display section.

7. The information processing apparatus according to claim 6, wherein
the acceptance section accepts a specification of an in-frame position outside the addition range of the basic depth map displayed on the display section, as the user instruction specifying a depth value of the in-frame position as the depth value of the region within the addition range.

8. The information processing apparatus according to claim 2, wherein
the assist depth map generation section generates the assist depth map for key frames of a video.

9. The information processing apparatus according to claim 8, further comprising:
an interpolation processing section adapted to interpolate the assist depth map of a frame between the key frames by using the assist depth maps of the key frames.

10. The information processing apparatus according to claim 1, wherein
the assist depth map generation section generates the assist depth map as a layer different from that of the basic depth map.

11. The information processing apparatus according to claim 10, further comprising:
a merged depth map generation section adapted to generate a merged depth map by merging the basic depth map and the assist depth map whose layers are different from each other.

12. The information processing apparatus according to claim 11, wherein,
in a case where the basic depth map and the assist depth map have respective depth values in a same in-frame position, the merged depth map generation section generates the merged depth map by using the depth value of the basic depth map.

13. The information processing apparatus according to claim 12, wherein
the basic depth map includes in-frame position depth values whose reliability is equal to or higher than a threshold.

14. The information processing apparatus according to claim 13, wherein
the reliability threshold is a threshold for determining that an in-frame position is an edge portion of a subject in an image, and
the basic depth map is an edge depth map that includes a depth value of the edge portion.

15. The information processing apparatus according to claim 14, further comprising:
a basic depth map generation section adapted to generate the edge depth map as the basic depth map.

16. The information processing apparatus according to claim 1, further comprising:
an overwrite depth map generation section adapted to generate an overwrite depth map that includes depth data for updating a depth value of the basic depth map.

17. The information processing apparatus according to claim 16, wherein
the overwrite depth map generation section generates the overwrite depth map in a layer different from that of the basic depth map.

18. The information processing apparatus according to claim 17, further comprising:
a merged depth map generation section adapted to merge, in a case where the basic depth map and the overwrite depth map have respective depth values in a same in-frame position, the basic depth map and the assist depth map whose layers are different from each other by using the depth value of the overwrite depth map.

19. An information processing method comprising:
generating an assist depth map that includes depth data to be added to a basic depth map.

20. A program for causing a computer to function as:
an assist depth generation section adapted to generate an assist depth map that includes depth data to be added to a basic depth map.
